# EUROPÄISCHE PATENTSCHRIFT

(11) **EP 1 118 599 B1**
(45) Veröffentlichungstag und Bekanntmachung des Hinweises auf die Patenterteilung: **03.09.2003**
(21) Anmeldenummer: 00811200.5
(22) Anmeldetag: 18.12.2000
(51) Int. Cl.: C04B 26/02

(54) **Durch Frontalpolymerisiation aushärtbare Mörtelmasse und Verfahren zur Befestigung von Ankerstangen**
By frontal polymerisation curable mortar and method of anchoring bars
Mortier durcissable par polymerisation amorcée en surface et procédé de fixation d'un élément ancré

(30) Priorität: 20.01.2000 DE 10002367
(43) Veröffentlichungstag der Anmeldung: 25.07.2001
(73) Patentinhaber: HILTI Aktiengesellschaft, 9494 Schaan (LI)
(72) Erfinder: Pfeil, Armin, 86926 Kaufering (DE); Bürgel, Thomas, 86899 Landsberg am Lech (DE); Morbidelli, Massimo, 8092 Zürich (CH); Rosell, Anny, 8092 Zürich (CH)
(74) Vertreter: Wildi, Roland

(56) Entgegenhaltungen:
- US-A- 4 035 467
- DATABASE WPI Section Ch, Week 199748 Derwent Publications Ltd., London, GB; Class A35, AN 1997-524522 XP002166933 ANONYMOUS: "Self-sustaining polymer cure technique" & RESEARCH DISCLOSURE, Bd. 401, Nr. 002, 10. September 1997 (1997-09-10), Emsworth, GB

## Beschreibung

Gegenstand der vorliegenden Erfindung ist eine durch Frontalpolymerisation nach Wärmeinitiierung aushärtbare Mörtelmasse sowie ein Verfahren zur Befestigung von Ankerstangen, Betoneisen oder dergleichen in festen Unterlagen unter Verwendung dieser Mörtelmasse.

Zur Befestigung von Ankerstangen, Betoneisen oder ähnlichen Elementen in einem Bohrloch in mineralischen Untergründen, wie Beton- oder Mauerwerk, werden normalerweise Zweikomponenten-Mörtelmassen auf Basis von Methacrylaten oder Epoxidharzen verwendet. Diese Mörtelmassen weisen nach dem Vermischen der miteinander reagierenden Bestandteile eine gewisse Topfzeit auf, während der das zur befestigende Element gesetzt werden kann, und erreichen nach Ablauf einer weiteren Zeitspanne ihre Endfestigkeit. Die genannte Topfzeit liegt unter üblichen Bedingungen im Bereich einiger Minuten. Die Aushärtung erfolgt in der Regel Innerhalb von einigen Minuten bis Stunden. In jedem Fall sind beide Effekte miteinander gekoppelt, d. h. eine längere Topfzeit führt zu einer längeren Aushärtungszeit, wobei diese Zeiten in Abhängigkeit von den Umgebungsbedingungen, namentlich der Temperatur, variieren können.

Da es auf Baustellen, wo solche Befestigungselemente üblicherweise gesetzt werden, kaum möglich ist, bei optimalen Bedingungen zu arbeiten, ergeben sich, wenn beispielsweise eine Vielzahl von Bohrlöchern zunächst mit Mörtelmasse beschickt wird und dann Befestigungselemente nacheinander eingeführt werden, unterschiedliche Zeiträume zwischen dem Ansetzen des aushärtenden Mörtelgemisches und der Einführung der Befestigungselemente, was zu vorzeitigem Aushärten der Mörtelmasse führen kann, so daß das Bohrloch nicht mehr genutzt werden kann - dies ist vor allem bei hohen Temperaturen (im Sommer) kritisch.

Es besteht daher ein Bedürfnis für eine Mörtelmasse, die eine sehr lange Topfzeit besitzt und deren Aushärtung gezielt zu einem gewünschten Zeitpunkt ausgelöst werden kann. Hierdurch wurde es möglich, zunächst eine große Vielzahl von Bohrlöchern mit der Mörtelmasse zu versehen, anschließend die Befestigungselemente einzuführen und zu justieren und dann die Aushärtung auszulösen, wodurch es möglich wird, eine optimale und weitgehend identische Aushärtung und damit weitgehend identische Auszugsfestigkeiten der montierten Befestigungselemente zu erreichen.

Von J.A. POJMAN et al. (J. Chem. Soc. Faraday Trans. (1996), 2825-2837) ist bereits die frei radikalische Frontalpolymerisation beschrieben worden. Es wird angegeben. daß unter gewissen Voraussetzungen die bei einer Polymerisationsreaktion frei werdende Wärme dazu genutzt werden kann, die Polymerisation benachbarter Monomerbereiche anzuregen. Vorausgesetzt wird dabei jedoch, daß die Frontalpolymerisation unter guter Wärmeisolation abläuft und daß sich die Front aufgrund der Schwerkraft zur Vermeidung störender Konvektionseffekte abwärts ausbreitet. Als Anwendungszwecke für die Frontalpolymerisation wird die Synthese von Materialien sowie die Aushärtung von großvolumigen Verbundmaterialien beschrieben.

Die Aufgabe der vorliegenden Erfindung besteht nun darin, eine Mörtelmasse anzugeben, mit der es möglich ist, die Topfzeit der Mörtelmasse von ihrer Aushärtungszeit zu trennen und damit die Befestigungselemente gegebenenfalls noch Stunden nach der Einführung der Mörtelmasse in die Bohrlöcher zu setzen, auszurichten und dann die Aushärtung durch Wärmeinitiierung innerhalb von Sekunden bis wenigen Minuten zu bewirken, so daß es auch unter den wärmeleitenden Bedingungen der chemischen Verankerung von namentlich metallischen Befestigungselementen in mineralischen Untergründen, wie Beton-, Mauerwerk und dergleichen, ohne weiteres gelingt, eine gezielte Aushärtung der Mörtelmasse in den Dübellöchern der Befestigungselemente zu bewirken. Eine weitere Aufgabe der vorliegenden Erfindung besteht darin, ein Verfahren zur Befestigung von Befestigungselementen, insbesondere von Ankerstangen, Betoneisen oder dergleichen in festen Unterlagen unter Verwendung einer solchen Mörtelmasse anzugeben.

Diese Aufgaben werden gelöst durch die Mörtelmasse gemäß den Ansprüchen I bis 17 und das Verfahren zur Befestigung von Ankerstangen, Betoneisen oder dergleichen in festen Unterlagen unter Verwendung dieser Mörtelmasse gemäß den Ansprüchen 18 bis 21.

Gegenstand der Erfindung ist daher insbesondere eine durch Frontalpolymerisation nach Wärmeinitiierung aushärtbare Mörtelmasse, die gekennzeichnet ist durch einen Gehalt an
a) mindestens einem polymerisierbaren Monomeren und/oder mindestens einem härtbaren Harz,
b) mindestens einem bei einer Temperatur von oberhalb 30°C thermisch aktivierbaren und/oder thermisch freisetzbaren Polymerisationsinitiator für das polymerisierbare Monomere und/oder Härtungsbeschleuniger für das härtbare Harz und
c) gegebenenfalls mindestens einem Füllstoff, wobei Art und Menge von polymerisierbarem Monomerem bzw. härtbarem Harz und Polymerisationsinitiator bzw. Härtungsbeschleuniger derart ausgewählt sind, daß sich nach dem Auslösen der Polymerisation eine Geschwindigkeit der Polymersiationsfront (Frontgeschwindigkeit) von mindestens 10 cm/min ergibt.

Die erfindungsgemäße Mörtelmasse härtet erst dann aus, wenn durch Wärmeinitiierung, d. h. durch punktuelles oder flächiges Erhitzen der Oberflächenschicht oder durch Erhitzen des Inneren der Mörtelmasse auf eine Temperatur von oberhalb 30°C, der thermisch aktivierbare und/oder thermisch freisetzbare Polymerisationsinitiator bzw. Härtungsbeschleuniger aktiv wird und die Polymerisation des Monomeren und/oder des härtbaren Harzes auslöst. Hierdurch wird es möglieh, eine praktisch beliebig lange Topfzeit des Mörtels zu erreichen und diese vollständig von der Aushärtungszeit zu trennen, da die Aushärtung erst durch die Wärmeinitiierung einsetzt. In dieser Weise wird es möglich, das zu befestigende Element gegebenenfalls noch Stunden nach der Einführung der Mörtelmasse in das Bohrloch zu setzen und zu justieren und die Aushärtung der Mörtelmasse durch kurzzeitiges Erhitzen der Mörteloberfläche innerhalb von Sekunden bis zu wenigen Minuten zu bewirken.

Darüber hinaus ermöglicht die erfindungsgemäße Mörtelmasse das Einarbeiten von Füllstoffen, die zum Erreichen hoher Lastwerte notwendig sind. Dabei wird auch durch die Anwendung von Füllstoffen die überraschend hohe Frontgeschwindigkeit der erfindungsgemäßen Mörtelmasse von mindestens 10 cm/min nicht beeinträchtigt.

Schließlich ist es mit der erfindungsgemäßen Mörtelmasse nicht nur möglich, die Frontalpolymerisation der Schwerkraft folgend abwärts zu bewirken, sondern auch in horizontaler bzw. vertikaler Richtung nach oben. In dieser Weise wird es durch entsprechende Einstellung der Viskosität der Mörtelmasse möglich, beispielsweise auch in Decken vorliegende, nach unten geöffnete Bohrlöcher mit der Mörtelmasse zu füllen, die Befestigungselemente einzuführen und die Aushärtung durch Wärmeinitiierung auszulösen.

Hierbei erfolgt erfindungsgemäß die Auslösung der Polymerisation der Mörtelmasse vorzugsweise durch punktuelles oder flächiges Erhitzen der Oberflächenschicht mit Hilfe einer Flamme, einer Lötkolbenspitze, eines Heißluftgebläses, eines Lichtblitzes / Laserstrahls, eines Induktionsofens, durch elektrische Widerstandsheizung, beispielsweise mit Hilfe eines Heizdrahtes einer Widerstandsheizung oder dergleichen, oder in situ durch eine chemische Reaktion oder aber durch Wärmeeintrag über ein wärmeleitendes Befestigungselement in das Innere der Mörtelmasse.

Die Frontgeschwindigkeit, d. h. die Geschwindigkeit der sich durch die Mörtelmasse hindurch bewegenden Polymerisationsfront wird in der Weise bestimmt. daß man den Temperaturverlauf in der Mörtelmasse in einem definierten Ringspalt in Abhängigkeit von der Zeit mißt. Die genaue Bestimmung der Frontgeschwindigkeit wird nachfolgend noch näher erläutert werden.

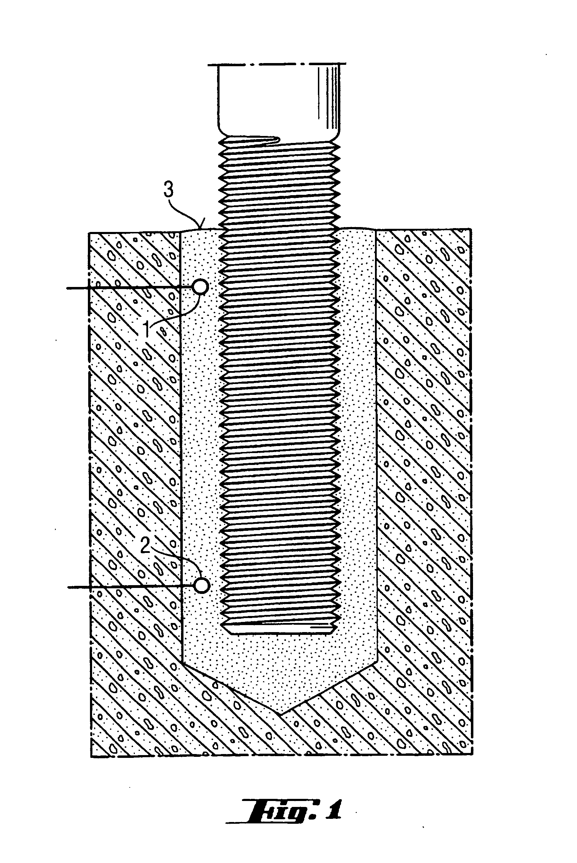

Im folgenden sei die Erfindung näher anhand der beigefügten Zeichnung erläutert. In der Zeichnung zeigt die einzige
Fig. 1 eine schematische Darstellung der Meßanordnung zur Bestimmung der Frontgeschwindigkeit.

Vorzugsweise erfolgt die Aushärtung der erfindungsgemäßen Mörtelmasse durch radikalische Polymerisation und/oder Polyaddition des bzw. der Monomeren und/oder des bzw. der härtbaren Harze.

Die bei dieser Polymerisation bzw. Polyaddition eingesetzten Polymerisationsinitiatoren und Polymerisationsbeschleuniger für das polymerisierbare Monomere bzw. Härtungsbeschleuniger für das härtbare Harz sind Verbindungen, die bei einer Temperatur oberhalb 30°C thermisch aktiviert und/oder thermisch freigesetzt werden, so daß sie dann die Aushärtung der polymerisierbaren Monomeren bzw. härtbaren Harze bewirken. Dabei können diese Polymerisationsinitiatoren bzw. -beschleuniger und Härtungsbeschleuniger entweder eine Selbstbeschleunigungs-Zersetzungstemperatur (Self-Accelerating Decomposition Temperature, SADT) von mindestens 30°C, vorzugsweise von 55 bis 80°C, aufweisen oder können, wenn sie eine unterhalb 30°C liegende SADT besitzen, durch entsprechende Einkapselung in Hüllmaterialien derart phlegmatisiert werden, daß sie erst beim Erhitzen auf eine Temperatur oberhalb 30°C unter entsprechender Erweichung bzw. Abreaktion des Hüllmaterials aktiv werden. Beispielsweise können sie mikroverkapselt oder chemisch, beispielsweise koordinativ gebunden sein. Ein besonderes Beispiel ist die Fixierung an ein Polymer, welches oberhalb der Grenztemperatur ein die Zersetzung eines Peroxid-Polymerisationsinitiators auslösendes Metall, wie Cobalt, freisetzt. Entsprechend kann man durch geeignete und dem Fachmann bekannte Kombination von Polymerisationsinitiatoren und Polymerisationsbeschleunigern bzw. Härtungsbeschleunigern mit entsprechenden Inhibitoren die gewünschte Auslösetemperatur von oberhalb 30°C gezielt einstellen.

Die erfindungsgemäß eingesetzten polymerisierbaren Monomere werden vorzugsweise ausgewählt aus:
Acrylaten, wie 2-(2-Ethoxyethoxy)ethylacrylat (EOEOEA), Tetrahydrofurfurylacrylat (THFA), Laurylacrylat, Phenoxyethylacrylat, Isodecylacrylat, Tridecylacrylat. ethoxyliertem Nonylphenolacrylat, Isobornylacrylat (IBOA), ethoxyliertem Bisphenol A-diacrylat, Polyethylenglykoldiacrylat (PEGDA), alkoxyliertem Diacrylat, propoxyliertem Neopentylglykoldiacrylat (NPGPODA), ethoxyliertem Neopentylglykoldiacrylat (NPGEODA), Hexandioldiacrylat (HDDA), Tetraethylenglykoldiacrylat (TTEGDA), Triethylenglykoldiacrylat (TIEGDA), Tripropylenglykoldiacrylat (TPGDA), Dipropylenglykoldiacrylat (DPGDA), Ditrimethylolpropantetraacrylat (DiTMPTTA), Tris-(2-hydroxyethyl)-isocyanurattriacrylat (THEIC-TA), Dipentaerythritolpentaacrylat (DiPEPA), ethoxyliertem Trimethylolpropantriacrylat (TMPEOTA), propoxyliertem Trimethylolpropantriacrylat (TMPPOTA), ethoxyliertem Pentaerythritoltetraacrylat (PPTTA), propoxyliertem Glyceryltriacrylat (GPTA), Pentaerythritoltetraacrylat (PETTA), Trimethylolpropantriacrylat (TMPTA) und modifiziertem Pentaerythritoltriacrylat;
Methacrylaten, wie Allylmethacrylat (AMA). Tetrahydrofurfurylmethacrylat (THFMA), Phenoxyethylmethacrylat, Isobornylmethacrylat, Triethylenglykoldimethacrylat (TIEGDMA), Ethylenglykoldimethacrylat (EGDMA), Tetraethylenglykoldimethacrylat (TTEGDMA), Polyethylenglykoldimethacrylat (PEGDMA), Butandioldimethacrylat (BDDMA), Diethylenglykoldimethacrylat (DEGDMA), Hexandioldimethacrylat (HDDMA), Polyethylenglykoldimethacrylat (PEG600DMA), Butylenglykoldimethacrylat (BGDMA), ethoxyliertem Bisphenol A-dimethacrylat, Trimethylolpropantrimethacrylat (TMPTMA); und/oder
Mono- oder höherfunktionellen Oligomeren oder Präpolymeren Acrylaten oder Methacrylaten, wie Polyester- und/oder Polyether-(meth)acrylaten, gegebenenfalls fettsäuremodifizierten Bisphenol-epoxy-(meth)acrylaten, epoxidierten Sojabohnenöl-(meth)acrylaten, Epoxy-Novolak-(meth)acrylaten, aromatischen und/oder aliphatischen (Meth)acrylat-Oligomeren. Epoxy(meth)acrylaten, aminmodifizierten Polyether(meth)acylat-Oligomeren, aromatischen und/oder aliphatischen Urethan(meth)acrylaten.

Gemäß einer ersten bevorzugten Ausführungsform der Erfindung besitzt die Mörtelmasse einen Gehalt an
a) 10 bis 98 Gew.-% mindestens einer Verbindung (A), die mindestens eine polymerisierbare Vinylgruppe aufweist.
b) 1 bis 30 Gew.-% mindestens eines bei einer Temperatur von oberhalb 30°C thermisch aktivierbaren und/oder thermisch freisetzbaren Polymerisationsinitiators (B) für die Vinylverbindung (A) mit einer Selbstbeschleunignungs-Zersetzungstemperatur (SADT) von mindestens 30°C.
c) 1 bis 60 Gew.-% mindestens eines Füllstoffs (C).
d) 0 bis 10 Gew.-% mindestens eines Polymerisationsbeschleunigers (D)
e) 0 bis 10 Gew.-% mindestens eines Verdickungsmittels (V).

Diese Mörtelmasse enthält als mindestens eine polymerisierbare Vinylgruppe aufweisende Verbindung(A), d. h. als polymerisierbare Vinylverbindung (A) in besonders bevorzugter Weise Acrylsäure. Methacrylsäure, einen Acrylsäureester, wie n-Butylacrylat oder Hexan-1,6-diol-diacrylat, einen (Meth)acrylsäureester, wie Methylmethacrylat oder Triethylenglykoldimethacrylat, Diethylenglykoldimethacrylat. Acrylamid, Methacrylamid. Methylendiacrylamid, Styrol, Vinylacetat, Divinylbenzol, einen Übergangsmetallnitrat/Acrylamid-Komplex, ein oligomeres aliphatisches Urethan-(meth)acrylat, Epoxy-(meth)acrylat, ein Ether-(meth)acrylat. Diethylenglykoldimethacrylat, Triethylenglykoldimethacrylat, Trimethylolpropantrimethacrylat, Trimethylolpropantriacrylat, Pentaerythritoltetraacrylat. Polyester-(meth)acrylat, Alkylvinylether und/oder Mischungen daraus.

Beispiele für die auch als Reaktivverdünner und als Träger für den Polymerisationsinitiator geeigneten Alkylvinylether sind Ethylvinylether, n-Butylvinylether. Isobutylvinylether, Octadecylvinylether, Cyclohexylvinylether. Butandioldivinylether, Hydroxybutylvinylether, Cyclohexandimethanolmonovinylether, Diethylengylcoldivinylether, Triethylengylcoldivinylether, n-Propylvinylvinylether. Isopropylvinylether. Dodecylvinylether, Diethylengylcolmonovinylether, Cyclohexandimethanoldivinylether, Trimethylolpropantrivinylether und Vinylether. welche z.B. durch Addition von Acetylen an Alkohole erhalten werden können, sowie Vinylethergruppen enthaltende Oligomere und Polymere, welche entweder z.B. durch Addition von Acetylen an OH-gruppenhaltige Oligomere/Polymere erhalten werden oder durch Umsetzung von Alkylvinylethern mit reaktiven Monomeren, Oligomeren und/oder Polymeren, insbesondere durch Umsetzung von Isocyanatenund Isocyanat-Präpolymeren mit hydroxyfunktionellen Alkylvinylether.

Bei dieser Mörtelmasse ist es besonders bevorzugt, als Polymerisationsinitiator (B) ein Peroxid, insbesondere ein Dialkylperoxid, wie Di-tert-butylperoxid, ein Diacylperoxid, wie Dibenzoylperoxid, ein Hydroperoxid, wie tert-Butylhydroperoxid oder Cumolhydroperoxid, einen Percarbonsäureester, wie Butylperbezoat, ein Perketal, wie 1,1-Di-tert-butyl-peroxy-3,3,5-trimethylcyclohexan, Natriumpersulfat. Kaliumpersulfat, Ammoniumpersulfat und/oder eine Azoverbindung, wie Azobisisobutyronitril, mit einer Selbstbeschleunigungs-Zersetzungstemperatur (SADT) von mindestens 30°C, vorzugsweise von 55 bis 80°C, zu verwenden.

Weiterhin ist es bevorzugt, im Fall des Einsatzes eines Polymerisationsbeschleunigers (D) einen solchen einzusetzen, der bei einer Temperatur von oberhalb 30°C, vorzugsweise in einem Temperaturbereich von 55 bis 80°C, thermisch aktivierbar und/oder thermisch freisetzbar ist. Hierbei handelt es sich insbesondere um ein Amin, vorzugsweise ein tertiäres Amin, wie Dimethylanilin, eine Heteropolysäure und/oder eine Metallverbindung, wie eine Cobaltverbindung.

Die obige Mörtelmasse enthält als Verdickungsmittel (V) vorzugsweise Kieselsäure und/oder ein Silikat, wie Laponit, Montmorillonit oder Bentonit.

Gemäß einer zweiten bevorzugten Ausführungsform der Erfindung besitzt die Mörtelmasse einen Gehalt an
a) 30 bis 98 Gew.-% mindestens eines härtbaren Epoxidharzes (E),
b) 1 bis 10 Gew.-% mindestens eines bei einer Temperatur von oberhalb 30°C thermisch aktivierbaren und/oder thermisch freisetzbaren Härtungsbeschleunigers (G) für das Epoxidharz,
c) 1 bis 60 Gew.-% mindestens eines Füllstoffs (C),
d) 0 bis 50 Gew.-% mindestens eines Härters (H),
e) 0 bis 50 Gew.-% mindestens eines Reaktivverdünners (R) und
f) 0 bis 10 Gew.-% mindestens eines Verdickungsmittels (V).

Als härtbares Epoxidharz (E) enthält die Mörtelmasse gemäß einer besonders bevorzugten Ausführungsfsorm ein Epoxidharz auf Basis Bisphenol und/oder Novolak. vorzugsweise ein Bisphenol-A-Epoxidharz. einen Diglycidylether von Bisphenol-A, ein Bisphenol-F-Epoxidharz. ein Novolakepoxidharz oder ein aliphatisches Epoxidharz.

Bei den gemäß dieser Ausführungsform eingesetzten Härtungsbeschleunigern (G) handelt es sich vorzugsweise um ein tertiäres Amin, wie Dimethylbenzylamin, ein Imidazol, einen Imidazol-Metallkomplex, ein Phenol, wie Hydrochinon, einen Novolak, ein Sulfoniumsalz, ein Iodoniumsalz, eine Lewis-Säure und/oder einen Lewis-Säure-Komplex, insbesondere einen Bortrichlorid/Amin- oder Ether-Komplex. Im Fall der Verwendung eines Härters (H) wird vorzugsweise eine Mannich-Base. ein Amin, ein Imidazol und/oder ein Säureanhydrid eingesetzt.

Der bei dieser Ausführungsform gegebenenfalls eingesetzte Reaktivverdünner (R) ist vorzugsweise ein Glycidylether eines aliphatischen Alkohols oder eines Phenols, insbesondere Butylglycidylether, Hexandioldiglycidylether, Trimethylolpropantriglycidylether oder Phenylglycidylether, oder aber auch Alkylvinylether, wie sie oben definiert worden sind.

Auch bei dieser Ausführungsform ist es möglich, als Verdickungsmittel (V) Kieselsäure und/oder ein Silikat. Laponit, Montmorillonit oder Bentonit einzusetzen.

Die erfindungsgemäße Mörtelmasse enthält vorzugsweise als Füllstoff (C) Quarzsand. Quarzmehl, pyrogenes Siliciumdioxid, Korund, Glaskügelchen, ein Carbonat, ein Sulfat, einen Zement, ein Metallpulver oder -granulat, ein hydratisiertes Schichtsilikat, wie Montmorillonit, Hectorit und Bentonit, und/oder einen organischen Füllstoff.

Des weiteren ist es möglich, zur Einstellung der Viskosität zusätzlich ein inertes Lösungs- und/oder Verdünnungsmittel (L) einzuarbeiten, beispielsweise einen Weichmacher, insbesondere ein Dialkylphthalat oder Dialkyladipat, und/oder Dimethylformamid.

Ein weiterer Gegenstand der Erfindung ist ein Verfahren zur Befestigung von Ankerstangen. Betoneisen oder dergleichen in festen Unterlagen, welches darin besteht, die oben definierte erfindungsgemäße Mörtelmasse in ein Dübelloch einzubringen, das zuvor in der festen Unterlage, an der das Befestigungselement befestigt werden soll, vorgesehen worden ist. Anschließend wird die Ankerstange, das Betoneisen oder ein ähnliches Befestigungselement in das mit der Mörtelmasse beschickte Dübelloch eingeführt, worauf die Frontalpolymcrisation durch Erhitzen der Oberflächenschicht der Mörtelmasse auf eine Temperatur oberhalb der Reaktionstemperatur des Polymerisationsinitiators, Polymerisationsbeschleunigers und/oder Härters ausgelöst wird. Dabei kann die Polymerisation der Mörtelmasse durch punktuelles oder flächiges Erhitzen der Oberflächenschicht oder im Inneren der Mörtelmasse ausgelöst werden. Während es möglich ist, die Mörtelmasse durch Wärmeeintrag über ein wärmeleitendes Befestigungselement auszulösen, ist es erfindungsgemäß bevorzugt, ein punktuelles oder flächiges Erhitzen der Oberflächenschicht der Mörtelmasse mit Hilfe einer Flamme, einer Lötkolbenspitze, eines Heißluftgebläses, eines Lichtblitzes, eines Laserstrahls, eines Induktionsofens, durch elektrische Widerstandsheizung, beispielsweise einne Heizdraht, und/oder mit Hilfe einer chemischen Reaktion in situ zu bewirken.

Bei der Durchführung des erfindungsgemäßen Verfahrens erfolgt die Auswahl der Dimensionen von Bohrloch und Ankerstange entsprechend dem Stand der Technik für Injektionssysteme. Dabei wird eine solche Menge der erfindungsgemäßen Mörtelmasse in das vorbereitete Bohrloch eingebracht, daß der Ringspalt nach dem Setzen des zu befestigenden Elements vollständig ausgefüllt ist. Erfindungsgemäß ist ein Justieren des Elements möglich, da die Mörtelmasse erst nach kurzzeitigem Erhitzen während einiger Sekunden an der Oberfläche auf mindestens 80°C aushärtet. Hierbei bildet sich eine Polymerisationsfront, die mit einer sehr hohen Geschwindigkeit von mindestens 10 cm/min durch den Ringspalt fortschreitet, wodurch das Element in der ausgehärteten Mörtelmasse fixiert wird.

In dieser Weise wird es möglich, eine große Vielzahl von Befestigungselementen in vorbereitete und bereits mit der Mörtelmasse ausgefüllte Dübellöcher einzubringen und nach Befestigung und Ausrichtung sämtlicher Befestigungselemente durch die angesprochene Wärmeinitiierung durch insbesondere punktuelles oder flächiges Erhitzen der Oberflächenschicht der Mörtelmasse auszulösen und eine schnelle und vollständige und vor allem gleichmäßige Aushärtung der Mörtelmasse zu bewirken und damit eine hohe Gleichmäßigkeit und Konstanz der Festigkcit der gesetzten Befestigungselemente zu erreichen.

Die folgenden Beispiele dienen der weiteren Erläuterung der Erfindung.

### Beispiel 1 Messung der Frontgeschwindigkeit

Die Messung der Frontgeschwindigkeit erfolgt im Inneren eines Ringspalts, wie er schematisch in der Fig. 1 dargestellt ist. Dieser Ringspalt wird definiert durch ein Bohrloch mit einem Innendurchmesser von 14 mm in Beton und einer Ankerstange aus verzinktem Stahl mit einem Außendurchmesser von 12 mm. An den Meßpunkten 1 und 2 sind in definiertem Abstand Thermoelemente vorgesehen, mit denen die Änderung der Temperatur in Abhängigkeit von der Zeit gemessen werden kann. Die zu untersuchende Mörtelmasse wird bei Raumtemperatur (23°C) in das trockene und von Bohrstaub befreite Bohrloch eingebracht. Nach dem Setzen der Ankerstange wird die Polymerisation der Mörtelmasse, die eine Starttemperatur von 150°C aufweist, durch Zündung mittels Lötkolben an einem Punkt der Mörteloberfläche ausgelöst.

Die Frontgeschwindigkeit (Geschwindigkeit der von dem Meßpuntk 1 zu Meßpuntk 2 wandernden Polymerisationsfront) wird durch das Verhältnis des Abstands der Meßpunkte 1 und 2 durch die gemessene Zeit beim Durchlaufen des Temperaturmaximums durch die Meßpunkte 1 und 2 berechnet.

Erfindungsgemäß beträgt die Frontgeschwindigkeit mindestens 10 cm/min, vorzugsweise 20 cm/min oder mehr.

### Beispiel 2

Es wird aus den folgenden Bestandteilen eine Mörtelmasse hergestellt:
77,5 Gew.-% Pentaerythritoltetraacrylat (PETTA)
5,0 Gew.-% eines Perketalgemisches als Polymerisationsinitiator
7,5 Gew.-% Quarzsand
7,5 Gew.-% Quarz
2,5 Gew.-% pyrogene Kieselsäure (Cab-O-Sil TS 720)

Die durch Vermischen der obigen Bestandteile erhaltene Mörtelmasse wird in ein Bohrloch in Beton der Qualität C 20 mit einer Bohrlochtiefe von 130 mm und einem Durchmesser von 14 mm eingebracht. Nach dem Einführen einer Ankerstange mit einem Außendurchmesser von 12 mm und Auslösen der Polymerisation durch Erhitzen auf eine Temperatur von 150°C mit Hilfe eines Lötkolbens ergibt sich eine vollständige Aushärtung der Masse innerhalb eines Zeitraums von 30 Sekunden. Die Auszugskraft der Ankerstange nach dem Aushärten beträgt etwa 40 kN.

### Beispiel 3

Man bereitet durch Vermischen aus den folgenden Bestandteilen eine Mörtelmasse:
- 44,0 %: Pentaerythrittetraacrylat
- 9,0 %: Trimethylolpropantrivinylether
- 19,0 %: Trimethylolpropantrimethacrylat
- 2,0 %: pyrogene Kieselsäure
- 10,0 %: Quarzsand
- 13,0 %: Dibenzoylperoxid (20% auf Gips)
- 3,0 %: thermisch akttvierbarer Polymerisationsinitiator

Nach dem Einführen einer Ankerstange in ein zuvor mit der Mörtelmasse beschicktes Bohrloch nach der in Beispiel 2 beschriebenen Weise wird die Polymerisation durch Erhitzen mit Hilfe eines elektrischen Heizdrahts ausgelöst unf führt zu einer vollständigen Aushärtung der Masse innerhalb eines Zeitraums von weniger als 25 Sekunden. Die Auszugskraft der Ankerstange nach dem Aushärten beträgt etwa 45 kN.

## Patentansprüche

1. Durch Frontalpolymerisation nach Wärmeinitiierung aushärtbare Mörtelmasse, **gekennzeichnet durch** einen Gehalt an
a) mindestens einem polymerisierbaren Monomeren und/oder mindestens einem härtbaren Harz.
b) mindestens einem bei einer Temperatur von oberhalb 30°C thermisch aktivierbaren und/oder thermisch freisetzbaren Polymerisationsinitiator für das polymerisierbare Monomere und/oder Härtungsbeschleuniger für das härtbare Harz und
c) gegebenenfalls mindestens einem Füllstoff, wobei Art und Menge von polymerisierbarem Monomerem bzw. härtbarem Harz und Polymerisationsinitiator bzw. Härtungsbeschleuniger derart ausgewählt sind, daß sich nach dem Auslösen der Polymerisation eine Geschwindigkeit der Polymersiationsfront (Frontgeschwindigkeit) von mindestens 10 cm/min ergibt.

2. Mörtelmasse nach Anspruch 1, **dadurch gekennzeichnet, daß** die Aushärtung der Mörtelmasse durch radikalische Polymerisation und/oder Polyaddition des bzw. der Monomeren **und/oder** des bzw. der härtbaren Harze erfolgt.

3. Mörtelmasse nach Anspruch 1 oder 2, **gekennzeichnet durch durch** einen Gehalt an
a) 10 bis 98 Gew.-% mindestens einer Verbindung (A), die mindestens eine polymerisierbare Vinylgruppe aufweist,
b) 1 bis 30 Gew.-% mindestens eines bei einer Temperatur von oberhalb 30°C thermisch aktivierbaren und/oder thermisch freisetzbaren Polymerisationsinitiators (B) für die Vinylverbindung (A) mit einer Selbstbeschleunignungs-Zersetzungstemperatur (SADT) von mindestens 30°C.
c) 1 bis 60 Gew.-% mindestens eines Füllstoffs (C).
d) 0 bis 10 Gew.-% mindestens eines Polymerisationsbeschleunigers (D)
e) 0 bis 10 Gew.-% mindestens eines Verdickungsmittels (V).

4. Mörtelmasse nach Anspruch 3, **dadurch gekennzeichnet, daß** sie als polymerisierbare Vinylverbindung (A) Acrylsäure, Methacrylsäure, einen Acrylsäureester, wie n-Butylacrylat oder Hexan-1,6-diol-diacrylat, einen (Meth)acrylsäureester, wie Methylmethacrylat oder Triethylenglykoldimethacrylat, Diethylenglykoldimethacrylat. Acrylamid. Styrol, Vinylacetat, Divinylbenzol, einen Übergangsmetallnitrat/Acrylamid-Komplex, ein oligomeres aliphatisches Urethan(meth)acrylat, Epoxy-(meth)acrylat, ein Ether-(meth)acrylat, Diethylenglykoldimethacrylat, Triethylenglykoldimethacrylat, Trimethylolpropantrimethacrylat, Trimethylolpropantriacrylat, Pentaerythritoltetraacrylat, Polyester-(meth)acrylat, Alkylvinylether und/oder Mischungen daraus enthält.

5. Mörtelmasse nach den Ansprüchen 3 bis 4 **dadurch gekennzeichnet, daß** sie als Polymerisationsinitiator (B) ein Peroxid, insbesondere ein Dialkylperoxid, wie Di-tert-butylperoxid, ein Diacylperoxid, wie Dibenzoylperoxid, ein Hydroperoxid, wie tert-Butylhydroperoxid oder Cumolhydroperoxid, einen Percarbonsäureester, wie Butylperbezoat, ein Perketal, wie 1,1-Di-tert-butyl-peroxy-3,3,5-trimethylcyclohexan, Natriumpersulfat, Kaliumpersulfat, Ammoniumpersulfat und/oder eine Azoverbindung, wie Azobisisobutyronitril, mit einer Selbstbeschleunigungs-Zersetzungstemperatur (SADT) von mindestens 30°C, vorzugsweise von 55 bis 80°C, enthält.

6. Mörtelmasse nach den Ansprüchen 3 bis 5, **dadurch gekennzeichnet, daß** sie einen bei einer Temperatur von oberhalb 30°C thermisch aktivierbaren und/oder thermisch freisetzbaren Polymerisationsbeschleuniger (D) enthält.

7. Mörtelmasse nach mindestens einem der Ansprüche 3 bis 6, **dadurch gekennzeichnet, daß** sie als Polymerisationsbeschleuniger (D) ein Amin, vorzugsweise ein tertiäres Anilin, wie Dimethylanilin, eine Heteropolysäure und/oder eine Metallverbindung, wie eine Cobaltverbindung, enthält.

8. Mörtelmasse nach mindestens einem der Ansprüche 3 bis 7, **dadurch gekennzeichnet, daß** sie als Verdickungsmittel (V) Kieselsäure und/oder ein Silikat. wie Laponit oder Bentonit enthält.

9. Mörtelmasse nach Anspruch 1 oder 2, **gekennzeichnet durch** einen Gehalt an
a) 30 bis 98 Gew.-% mindestens eines härtbaren Epoxidharzes (E).
b) 1 bis 10 Gew.-% mindestens eines bei einer Temperatur von oberhalb 30°C thermisch aktivierbaren und/oder thermisch freisetzbaren Härtungsbeschleunigers (G) für das Epoxidharz,
c) 1 bis 60 Gew.-% mindestens eines Füllstoffs (C),
d) 0 bis 50 Gew.-% mindestens eines Härters (H) und
e) 0 bis 50 Gew.-% mindestens eines Reaktivverdünners (R),
f) 0 bis 10 Gew.-% mindestens eines Verdickungsmittels (V).

10. Mörtelmasse nach Anspruch 9, **dadurch gekennzeichnet, daß** sie als härtbares Epoxidharz (E) ein Epoxidharz auf Basis Bisphenol und/oder Novolak, vorzugsweise ein Bisphenol-A-Epoxidharz. einen Diglycidylether von Bisphenol-A, ein Bisphenol-F-Epoxidharz, ein Novolakepoxidharz oder ein aliphatisches Epoxidharz enthält.

11. Mörtelmasse nach Anspruch 9 oder 10, **dadurch gekennzeichnet, daß** sie als Härtungsbeschleuniger (G) ein tertiäres Amin, wie Dimethylbenzylamin, ein Imidazol, einen Imidazol-Metallkomplex, ein Phenol, wie Hydrochinon, einen Novolak, ein Sulfoniumsalz, ein Iodoniumsalz, eine Lewis-Säure und/oder einen Lewis-Säure-Komplex, insbesondere einen Bortrichlorid/Amin- oder Ether-Komplex, mit einer Aktivierungstemperatur von mindestens 30°C, vorzugsweise von 55 bis 80°C, enthält.

12. Mörtelmasse nach mindestens einem der Ansprüche 9 bis 11, **dadurch gekennzeichnet, daß** sie als Härter (H) eine Mannich-Base, ein Amin, ein Imidazol und/oder ein Säureanhydrid enthält.

13. Mörtelmasse nach Ansprüchen 9 bis 12, **dadurch gekennzeichnet, daß** sie als Reaktivverdünner (R) einen Glycidylether eines aliphatischen Alkohols oder eines Phenols, insbesondere Butylglycidylether, Hexandioldiglycidylether, Trimethylolpropantriglycidylether oder Phenylglycidylether und/oder einen oder mehrere Alkylvinylether enthält.

14. Mörtelmasse nach mindesten einem der Ansprüche 9 bis 13, **dadurch gekennzeichnet, daß** sie als Verdickungsmittel (V) Kieselsäure und/oder ein Silikat. wie Laponit oder Bentonit enthält.

15. Mörtelmasse nach mindestens einem der vorhergehenden Ansprüche, **dadurch gekennzeichnet, daß** sie als Füllstoff (C) Quarzsand, Quarzmehl, pyrogenes Siliciumdioxid, Korund. Glaskügelchen, ein Carbonat, ein Sulfat, Zement. ein Metallpulver oder -granulat, ein hydratisiertes Schichtsilikat, wie Montmorillonit, Hectorit und Bentonit, und/oder einen organischen Füllstoff enthält.

16. Mörtelmasse nach mindestens einem der vorhergehenden Ansprüche, **dadurch gekennzeichnet, daß** sie zusätzlich ein inertes Lösungs- und/oder Verdünnungsmittel (L) enthält.

17. Mörtelmasse nach Anspruch 16, **dadurch gekennzeichnet, daß** sie als inertes Lösungsmittel (L) einen Weichmacher, insbesondere ein Dialkylphthalat oder Dialkyladipat, und/oder Dimethylformamid enthält.

18. Verfahren zur Befestigung von Ankerstangen, Betoneisen oder dergleichen in festen Unterlagen, **dadurch gekennzeichnet, daß** man die Mörtelmasse nach mindestens einem der vorhergehenden Ansprüche in das Dübelloch einbringt, die Ankerstange, das Betoneisen oder dergleichen einführt und die Frontalpolymerisation durch Erhitzen der Oberflächenschicht der Mörtelmasse auf eine Temperatur oberhalb der Reaktionstemperatur des Polymerisationsinitiators, Polymerisationsbeschleunigers und/oder Härters auslöst.

19. Verfahren nach Anspruch 18, **dadurch gekennzeichnet, daß** die Polymerisation der Mörtelmasse durch punktuelles oder flächiges Erhitzen der Oberflächenschicht oder im Inneren der Mörtelmasse ausgelöst wird.

20. Verfahren nach Anspruch 18 oder 19, **dadurch gekennzeichnet, daß** die Polymerisation der Mörtelmasse durch Wärmeeintrag über das Befestigungselement ausgelöst wird.

21. Verfahren nach mindestens einem der Ansprüche 18 bis 20, **dadurch gekennzeichnet, daß** das punktuelle oder flächige Erhitzen mit Hilfe einer Flamme, einer Lötkolbenspitze, eines Heißluftgebläses, eines Induktionsofens, eines Lichtblitzes, eines Laserstrahls, durch elektrische Widerstandsheizung und/oder in situ durch eine chemische Reaktion erfolgt.

## Claims

1. A mortar composition which can be cured by frontal polymerisation after thermal initiation, **characterised by** a content of
a) at least one polymerisable monomer and/or at least one curable resin,
b) at least one polymerisation initiator for the polymerisable monomer and/or curing accelerator for the curable resin, which initiator and/or accelerator can be thermally activated and/or can be liberated thermally at a temperature above 30°C, and
c) optionally at least one filler, wherein the type and amount of polymerisable monomer or curable resin and polymerisation initiator or curing accelerator are selected so that after the initiation of polymerisation a velocity of the polymerisation front (front velocity) of at least 10 cm/min occurs.

2. A mortar composition according to claim 1, **characterised in that** curing of the mortar composition occurs by radical polymerisation and/or polyaddition of the monomer or monomers **and/or** of the curable resin or resins.

3. A mortar composition according to claims I or 2, **characterised by** a content of
a) 10 to 98 % by weight of at least one compound (A) which contains at least one polymerisable vinyl group,
b) 1 to 30 % by weight of at least one polymerisation initiator (B) for the vinyl compound (A), which polymerisation initiator can be thermally activated and/or can be liberated thermally at a temperature above 30°C, and which has a self-accelerating decomposition temperature (SADT) of at least 30°C,
c) 1 to 60 % by weight of at least one filler (C),
d) 0 to 10 % by weight of at least one polymerisation accelerator (D), and
e) 0 to 10 % by weight of at least one thickening agent (V).

4. A mortar composition according to claim 3, **characterised in that** it contains, as polymerisable vinyl compound (A), acrylic acid, methacrylic acid, an ester of acrylic acid such as n-butyl acrylate or hexane-1,6-diol diacrylate, an ester of (meth)acrylic acid such as methyl methacrylate, triethylene glycol dimethacrylate or diethylene glycol dimethacrylate, acrylamide, styrene, vinyl acetate, divinylbenzene, a transition metal nitrate/acrylamide complex, an oligomeric aliphatic urethane (meth)acrylate, an epoxy(meth)acrylate, an ether (meth)acrylate, diethylene glycol dimethacrylate, triethylene glycol dimethacrylate, trimethylolpropane trimethacrylate, trimethylolpropane triacrylate, pentaerythritol tetraacrylate, a polyester (meth)acrylate, an alkyl vinyl ether and/or mixtures thereof.

5. A mortar composition according to claims 3 to 4, **characterised in that** it contains, as polymerisation initiator (B), a peroxide, particularly a dialkyl peroxide such as di-tert-butyl peroxide, a diacyl peroxide such as dibenzoyl peroxide, a hydroperoxide such as tert-butyl hydroperoxide or cumene hydroperoxide, a percarboxylic acid ester such as butyl perbenzoate, a perketal such as 1,1-di-tert-butyl-peroxy-3,3,5-trimethylcyclohexane, sodium persulphate, potassium persulphate, ammonium persulphate and/or an azo compound such as azobisisobutyronitrile, which has a self-accelerating decomposition temperature (SADT) of at least 30°C, preferably of 55 to 80°C.

6. A mortar composition according to claims 3 to 5, **characterised in that** it contains a polymerisation accelerator (D) which can be thermally activated and/or thermally liberated at a temperature above 30°C.

7. A mortar composition according to at least one of claims 3 to 6, **characterised in that** it contains, as polymerisation accelerator (D), an amine, preferably a tertiary aniline such as dimethylaniline, a heteropoly acid and/or a metal compound such as a cobalt compound.

8. A mortar composition according to at least one of claims 3 to 7, **characterised in that** it contains, as thickening agent (V), hydrated silica and/or a silicate such as laponite or bentonite.

9. A mortar composition according to claims 1 or 2, **characterised by** a content of
a) 30 to 98 % by weight of at least one curable epoxy resin (E),
b) 1 to 10 % by weight of at least one curing accelerator (G) for the epoxy resin, which accelerator can be thermally activated and/or thermally liberated at a temperature above 30°C,
c) 1 to 60 % by weight of at least one filler (C),
d) 0 to 50 % by weight of at least one hardener (H), and
e) 0 to 50 % by weight of at least one reactive thinner (R),
f) 0 to 10 % by weight of at least one thickening agent (V).

10. A mortar composition according to claim 9, **characterised in that** it contains, as curable epoxy resin (E), an epoxy resin based on bisphenol and/or novolac, preferably a bisphenol A epoxy resin, a diglycidyl ether of bisphenol A, a bisphenol F epoxy resin, a novolac epoxy resin or an aliphatic epoxy resin.

11. A mortar composition according to claims 9 or 10, **characterised in that** it contains, as curing accelerator (G), a tertiary amine such as dimethylbenzylamine, an imidazole, an imidazole-metal complex, a phenol such as hydroquinone, a novolac, a sulphonium salt, an iodonium salt, a Lewis acid and/or a Lewis acid complex, particularly a boron trichloride-amine or -ether complex, with an activation temperature of at least 30°C, preferably of 55 to 80°C.

12. A mortar composition according to at least one of claims 9 to 11, **characterised in that** it contains, as hardener (H), a Mannich base, an amine, an imidazole and/or an acid anhydride.

13. A mortar composition according to claims 9 to 12, **characterised in that** it contains, as reactive thinner (R), a glycidyl ether of an aliphatic alcohol or of a phenol, particularly butyl glycidyl ether, hexanediol diglycidyl ether, trimethylolpropane triglycidyl ether or phenyl glycidyl ether and/or one or more alkyl vinyl ethers.

14. A mortar composition according to at least one of claims 9 to 13, **characterised in that** it contains, as thickening agent (V), hydrated silica and/or a silicate such as laponite or bentonite.

15. A mortar composition according to at least one of the preceding claims, **characterised in that** it contains, as filler (C), quartz sand, quartz flour, pyrogenic silica, corundum, glass spheres, a carbonate, a sulphate, cement, a metal powder or metal granules, a hydrated layer silicate such as montmorillonite, hectorite or bentonite, and/or an organic filler.

16. A mortar composition according to at least one of the preceding claims, **characterised in that** it additionally contains an inert solvent and/or diluent (L).

17. A mortar composition according to claim 16, **characterised in that** it contains, as inert solvent (L), a plasticiser, particularly a dialkyl phthalate or a dialkyl adipate, and/or dimethylformamide.

18. A method of fixing anchoring rods, concrete reinforcing bars or the like in solid substrates, **characterised in that** the mortar composition according to at least one of the preceding claims is placed in the fixing hole, the anchoring rod, the concrete reinforcing bar or the like is introduced, and frontal polymerisation is initiated by heating the surface layer of the mortar composition to a temperature above the reaction temperature of the polymerisation initiator, polymerisation accelerator and/or hardener.

19. A method according to claim 18, **characterised in that** polymerisation of the mortar composition is initiated by applying heat to a point or area of the surface layer or in the interior of the mortar composition.

20. A method according to claims 18 or 19, **characterised in that** polymerisation of the mortar composition is initiated by introducing heat via the fixing element.

21. A method according to at least one of claims 18 to 20, **characterised in that** heating of a point or area is effected by means of a flame, a soldering iron tip, a hot air blower, an induction oven, a photoflash, a laser beam, by electrical resistance heating and/or in situ by a chemical reaction.

## Revendications

1. Mortier durcissable par polymérisation amorcée en surface après initiation thermique, **caractérisé par** une teneur en
a) au moins un monomère polymérisable et/ou au moins une résine durcissable,
b) au moins un initiateur de polymérisation activable thermiquement et/ou libérable thermiquement à une température supérieure à 30 °C pour le monomère polymérisable et/ou un accélérateur de durcissement pour la résine durcissable et
c) éventuellement au moins une matière de charge, la nature et la quantité de monomère polymérisable, respectivement de résine durcissable et d'initiateur de polymérisation, respectivement d'accélérateur de durcissement étant choisies de façon à obtenir, après le déclenchement de la polymérisation, une vitesse de polymérisation en surface (vitesse de surface) d'au moins 10 cm/min.

2. Mortier selon la revendication 1, **caractérisé en ce que** le durcissement du mortier s'effectue par polymérisation radicalaire et/ou polyaddition du, respectivement des monomères et/ou de la, respectivement des résines durcissables.

3. Mortier selon la revendication 1 ou 2, **caractérisé par** une teneur de
a) 10 à 98 % en poids d'au moins un composé (A) qui comporte au moins un groupe vinyle polymérisable,
b) 1 à 30 % en poids d'au moins un initiateur de polymérisation (B) activable thermiquement et/ou libérable thermiquement à une température supérieure à 30 °C pour le composé vinylique (A) à une température de décomposition auto-accélérée (SADT) d'au moins 30 °C,
c) 1 à 60 % en poids d'au moins une matière de charge (C),
d) 0 à 10 % en poids d'au moins un accélérateur de polymérisation (D)
e) 0 à 10 % en poids d'au moins un agent épaississant (V).

4. Mortier selon la revendication 3, **caractérisé en ce qu'**il contient, comme composé vinylique polymérisable (A), de l'acide acrylique, de l'acide méthacrylique, un ester acrylique tel que l'acrylate de n-butyle ou du diacrylate de l'hexane-1,6-diol, un ester (méth)acrylique tel que méthacrylate de méthyle ou diméthacrylate de triéthylène-glycol, diméthacrylate de diéthylène-glycol, acrylamide, styrène, acétate de vinyle, divinylbenzène, un complexe nitrate de métal de transition/acrylamide, un uréthane (méth)acrylate d'oligomère aliphatique, (méth)acrylate époxyde, éther (méth)acrylate, diméthacrylate de diéthylène-glycol, diméthacrylate de triéthylène-glycol, un triméthacrylate de triméthylolpropane, un triacrylate de triméthylolpropane, tétraacrylate de triméthylolpropane pentaérythritol, polyester-(métha)crylate, alkylvinyléther et/ou des mélanges de ceux-ci.

5. Mortier selon les revendications 3 à 4, **caractérisé en ce qu'**il contient, comme initiateur de polymérisation (B), un peroxyde, en particulier un peroxyde de dialkyle tel que peroxyde de di-tert-butyle, un peroxyde de diacyle tel que peroxyde de dibenzoyle, un hydroperoxyde tel que l'hydroperoxyde de tert-butyle ou hydroperoxyde de cumène, un ester percarbonique tel que le perbenzoate de butyle, un percétal tel que 1,1-di-tert-butyle-peroxy-3,3,5-triméthylcyclohexane, persulfate de sodium, persulfate de potassium, persulfate d'ammonium et/ou un composé azoïque tel que azobisisobutyronitrile, avec une température de décomposition auto-accélérée (SADT) d'au moins 30 °C, de préférence de 55 à 80 °C.

6. Mortier selon les revendications 3 à 5, **caractérisé en ce qu'**il contient un accélérateur de polymérisation (D) activable thermiquement et/ou libérable thermiquement à une température supérieure à 30 °C.

7. Mortier selon au moins une des revendications 3 à 6, **caractérisé en ce qu'**il contient, comme accélérateur de polymérisation (D), une amine, de préférence une aniline tertiaire telle que diméthylaniline, un hétéropolyacide et/ou un composé métallique tel qu'un composé du cobalt.

8. Mortier selon au moins une des revendications 3 à 7, **caractérisé en ce qu'**il contient, comme agent épaississant (V), de l'acide silicique et/ou un silicate tel que laponite ou bentonite.

9. Mortier selon la revendication 1 ou 2, **caractérisé par** une teneur de
a) 30 à 98 % en poids d'au moins une résine époxyde durcissable (E),
b) 1 à 10 % en poids d'au moins un accélérateur de durcissement (G) activable thermiquement et/ou libérable thermiquement à une température supérieure à 30 °C pour la résine époxyde,
c) 1 à 60 % en poids d'au moins une matière de charge (C),
d) 0 à 50 % en poids d'au moins un durcisseur (H) et
e) 0 à 50 % en poids d'au moins un diluant réactif (R),
f) 0 à 10 % en poids d'au moins un agent épaississant (V).

10. Mortier selon la revendication 9, **caractérisé en ce qu'**il contient, comme résine époxyde durcissable (E), une résine époxyde à base de bisphénol et/ou de novolaque, de préférence une résine époxyde bisphénol A, un diglycidyl éther de bisphénol A, une résine époxyde bisphénol F, une résine époxyde novolaque ou une résine époxyde aliphatique.

11. Mortier selon la revendication 9 ou 10, **caractérisé en ce qu'**il contient, comme accélérateur de durcissement (G) une amine tertiaire telle que diméthylbenzylamine, un imidazole, un complexe imidazol-métal, un phénol tel que hydroquinone, une novolaque, un sel de sulfonium, un sel d'iodonium, un acide de Lewis et/ou un complexe d'acides de Lewis, en particulier un complexe de trichlorure de bore/amine ou éther, avec une température d'activation d'au moins 30 °C, de préférence de 55 à 80 °C.

12. Mortier selon au moins une des revendications 9 à 11, **caractérisé en ce qu'**il contient, comme durcisseur (H), une base de Mannich, une amine, un imidazole et/ou un anhydride d'acide.

13. Mortier selon les revendications 9 à 12, **caractérisé en ce qu'**il contient, comme diluant réactif (R), un glycidyl éther d'un alcool aliphatique ou d'un phénol, en particulier éther de butyle normal et de glycidyle, hexandioldiglycidyléther,
triméthylolpropanetriglycidyléther ou phénylglycidéther et/ou un ou plusieurs alkylvinyléthers.

14. Mortier selon au moins une des revendications 9 à 13, **caractérisé en ce qu'**il contient, comme agent épaississant (V), de l'acide silicique et/ou un silicate tel que laponite ou bentonite.

15. Mortier selon au moins une des revendications précédentes, **caractérisé en ce qu'**il contient, comme matière de charge (C), du sable quartzeux, de la farine de quartz, du dioxyde de silicium pyrogéné, du corindon, des billes de verre, un carbonate, un sulfate, du ciment, une poudre ou un granulat métalliques, un phyllosilicate hydraté tel que montmorillonite, hectorite et bentonite, et/ou une matière de charge organique.

16. Mortier selon au moins une des revendications précédentes, **caractérisé en ce qu'**il contient en plus un solvant et/ou un diluant inertes(L).

17. Mortier selon la revendication 16, **caractérisé en ce qu'**il contient, comme solvant inerte, (L) un plastifiant, en particulier un phtalate de dialkyle ou un adipate de dialkyle, et/ou du diméthylformamide.

18. Procédé pour la fixation de tiges d'ancrage, de fers à béton ou analogues dans des supports solides, **caractérisé en ce qu'**on introduit le mortier conforme à au moins une des revendications précédentes dans le trou de cheville, on insère la tige d'ancrage, le fer à béton ou analogue et on déclenche la polymérisation en surface en chauffant la couche superficielle du mortier à une température supérieure à la température de réaction de l'initiateur de polymérisation, de l'accélérateur de polymérisation et/ou du durcisseur.

19. Procédé selon la revendication 18, **caractérisé en ce que** la polymérisation du mortier est déclenchée en chauffant un point ou la surface de la couche superficielle ou l'intérieur de la masse de mortier.

20. Procédé selon la revendication 18 ou 19, **caractérisé en ce que** la polymérisation du mortier est déclenchée par admission de chaleur par l'intermédiaire de l'élément de fixation.

21. Procédé selon au moins une des revendications 18 à 20, **caractérisé en ce que** le chauffage d'un point ou de la surface s'effectue à l'aide d'une flamme, d'une pointe de fer à souder, d'une soufflante à air chaud, d'un four à induction, d'un éclair lumineux, d'un faisceau laser, par chauffage électrique par résistance et/ou in situ par une réaction chimique.
